# EUROPEAN PATENT APPLICATION

(11) **EP 4 043 239 A1**
(43) Date of publication of application: **17.08.2022**
(21) Application number: 20874230.4
(22) Date of filing: 15.09.2020
(51) Int. Cl.: B60C 5/01, B60C 9/18

(54) **PNEUMATIC TIRE**

(30) Priority: 08.10.2019 JP 2019185319
(71) Applicant: Sumitomo Rubber Industries, Ltd., Kobe-shi, Hyogo 651-0072 (JP)
(72) Inventor: ANDO, Kanta, Kobe-shi, Hyogo 651-0072 (JP)
(74) Representative: TBK
(86) International application number: PCT/JP2020/034954
(87) International publication number: WO 2021/070582

(57) **Abstract**

A pneumatic tire in which the production efficiency can be improved, and the material recyclability can be improved while ensuring the stability of the ground contact shape of the tire. A tread reinforcing component 4 made of a thermoplastic resin is disposed between a tire inner cavity surface 1H and a tire ground contacting surface 1S. On an arbitrary reference line parallel with the tire equator C, a distance L1 in the tire radial direction from the tire inner cavity surface 1H to the thickness center point 4P of the tread reinforcing component 4 is in a range of 50% to 95% of a distance L0 in the tire radial direction from the tire inner cavity surface 1H to the tire ground contacting surface 1S.

## Description

### Technical Field

The present invention relates to a pneumatic tire in which a tread reinforcing component is made of a thermoplastic resin.

### Background of the art

Conventional pneumatic tires have secured tire basic characteristics by using vulcanized rubber and cord materials such as organic fibers and steel fibers.

However, vulcanized rubber has a problem such that it is difficult to recycle the material.

In addition, the use of cord materials, especially carcass cords, has problems of complicating the manufacturing process and increasing manufacturing costs.

Therefore, Patent Document 1 below proposes a carcassless tire in which a tire framework member is made of a thermoplastic resin.

The tire framework member comprises a pair of bead portions, a pair of side portions extending from the pair of bead portions, and a crown portion connecting the pair of side portions. And on the crown portion, a tread made of vulcanized rubber is disposed.

### Prior Art Document

### Patent Document

Patent Document 1: Japanese Patent No. 6138695

### Summary of the Invention

### Problems to be solved by the Invention

However, in the above-mentioned proposed tire, a cord layer in which a reinforcing cord such as a steel cord is wound in a spiral manner is used as a tread reinforcing component.

Therefore, when manufacturing the tire, a step of winding a reinforcing cord on the outer peripheral surface of the tire framework member is required, which involves a problem of lowering production efficiency. Further, since a steel cord and the like is used as the reinforcing cord, there is a problem such that the material recyclability cannot be sufficiently improved.

The present invention is based on that the tread reinforcing component is made of a thermoplastic resin and the position of the tread reinforcing component is limited, and
a problem is to provide a pneumatic tire in which, while ensuring the stability of the ground contact shape of the tire, the production efficiency is improved and the material recyclability is improved.

### Means for solving the Problems

The present invention is a pneumatic tire comprising a tread reinforcing component disposed between a tire inner cavity surface and a tire ground contacting surface, wherein the tread reinforcing component is made of a thermoplastic resin, and on an arbitrary reference line which extends across the tread reinforcing component in parallel with the tire equator, a distance L1 in the tire radial direction from the tire inner cavity surface to the thickness center point of the tread reinforcing component is in a range of 50% to 95% of a distance L0 in the tire radial direction from the tire inner cavity surface to the tire ground contacting surface.

In the pneumatic tire according to the present invention, it is preferable that the tire comprises a toroidal tire framework member including a pair of bead portions, a pair of sidewall portions and an under tread portion connecting the pair of sidewall portions, and
an inner surface in the tire radial direction, of the under tread portion forms the tire inner cavity surface, and on an outer surface in the tire radial direction, the tread reinforcing component is disposed.

In the pneumatic tire according to the present invention, it is preferable that the tire framework member is made of the same thermoplastic resin or plural kinds of thermoplastic resins.

In the pneumatic tire according to the present invention, it is preferable that the tire is provided, on the outer side in the tire radial direction of the tread reinforcing component, with a ground contacting tread component which forms the tire ground contacting surface, and the ground contacting tread component is made of vulcanized rubber or a thermoplastic resin.

In the pneumatic tire according to the present invention, it is preferable that a tensile elastic modulus of the thermoplastic resin forming the tread reinforcing component is not less than 1000 MPa.

In the pneumatic tire according to the present invention, it is preferable that a tensile elastic modulus of the thermoplastic resin forming the tire framework member is not more than 30 to 200 MPa.

In the pneumatic tire according to the present invention, it is preferable that the thermoplastic resin of the tread reinforcing component contains a fibrous filler.

In the pneumatic tire according to the present invention, it is preferable that the filler is oriented in the tire circumferential direction.

### Effects of the Invention

In the pneumatic tire of the present invention, the tread reinforcing component is made of the thermoplastic resin.

Thereby, a process of winding the reinforcing cord becomes unnecessary, and the production efficiency can be improved while improving the material recyclability.

When the tread reinforcing component is made of a thermoplastic resin, the binding force is inferior to a case where a reinforcing cord such as a steel cord is used, therefore, the stability of the ground contact shape of the tire is reduced, and it tends to adversely affect the running performance.

On the other hand, in the present invention, the distance L1 in the tire radial direction from the tire inner cavity surface to the thickness center point of the tread reinforcing component is limited in a range of 50% to 95% of the distance L0 in the tire radial direction from the tire inner cavity surface to the tire ground contacting surface. That is, the tread reinforcing component is disposed near the tire ground contacting surface.

Thereby, it is possible to ensure the stability of the ground contact shape of the tire although the tread reinforcing component is made of the thermoplastic resin, and the adverse effect on the running performance can be suppressed to a low level.

### Brief description of the Drawings

[FIG. 1 ] a cross-sectional view showing an embodiment of a pneumatic tire of the present invention.
[Fig. 2 ] a cross-sectional view enlargedly showing the bead portion.
[FIG. 3 ] a cross-sectional view enlargedly showing the tread reinforcing component together with the tread reinforcing component.
[FIG. 4 ] (a) to (c) are conceptual diagrams showing a method for manufacturing the pneumatic tire.

### Mode for carrying out the invention

Hereinafter, embodiments of the present invention will be described in detail.

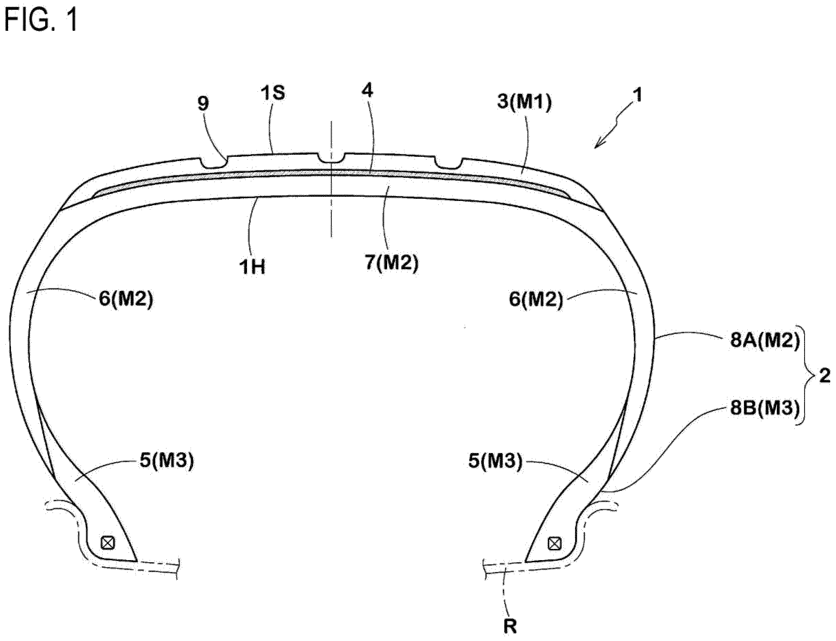

As shown in FIG. 1, a pneumatic tire 1 of the present embodiment (hereinafter, may be simply referred to as the tire 1) comprises a tread reinforcing component 4 disposed between a tire inner cavity surface 1H and a tire ground contacting surface 1S, and
the tread reinforcing component 4 is made of a thermoplastic resin.

Specifically, the tire 1 in this example is composed of
a toroidal tire framework member 2 having the tire inner cavity surface 1H,
a ground contacting tread component 3 having the tire ground contacting surface 1S, and
a tread reinforcing component 4 disposed between an under tread portion 7 of the tire framework member 2 and the ground contacting tread component 3.

In this example, there is shown a case where the tire 1 is a tire for passenger cars. However, the present invention is not limited to this, and can be applied to tires of various categories such as for motorcycles, light trucks, large trucks and the like.

The tire framework member 2 comprises a pair of bead portions 5, a pair of sidewall portions 6 extending outwardly in the tire radial direction from the pair of bead portions 5, and an under tread portion 7 connecting the pair of sidewall portions 6.

The inner surface in the tire radial direction, of the under tread portion 7 constitutes the tire inner cavity surface 1H.

The bead portion 5 is a portion that fits into the rim R when mounted on a rim.

The sidewall portion 6 is a portion constituting the side portion of the tire 1, and extends outwardly in the tire radial direction while being curved in an arc shape which is convex toward the outside in the tire axial direction.

The under tread portion 7 is a portion that supports the ground contacting tread component 3, and connects between the outer ends in the tire radial direction, of the sidewall portions 6.

The tire framework member 2 is made of the same thermoplastic resin or plural kinds of thermoplastic resins.

The expression "the tire framework member 2 is made of the same thermoplastic resin" means that the bead portion 5, the sidewall portion 6 and the under tread portion 7 are made of the same thermoplastic resin. The expression "made of plural kinds of thermoplastic resins" means that, for example, the bead portion 5, the sidewall portion 6 and the under tread portion 7 are made of different thermoplastic resins.

In this example, there is illustrated a case where the pair of sidewall portions 6 and the under tread portion 7 are made of a second thermoplastic resin M2, and the pair of bead portions 5 is made of a third thermoplastic resin M3

In other words, the tire framework member 2 includes a first base body 8A made of the second thermoplastic resin M2 and a second base body 8B made of the third thermoplastic resin M3.

The first base body 8A forms the pair of sidewall portions 6 and the under tread portion 7.

The second base body 8B forms the pair of bead portions 5.

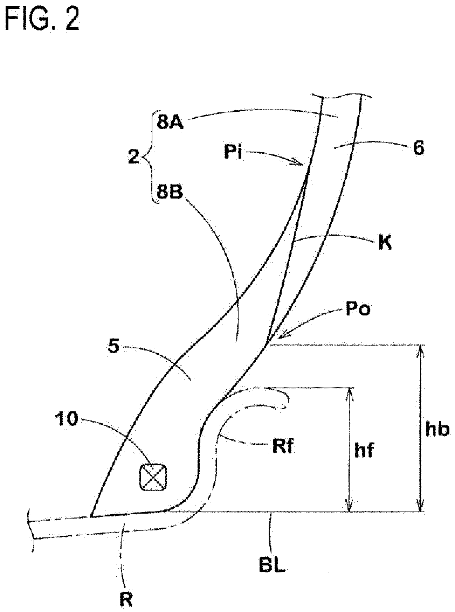

It is preferable for increasing the bond strength between the first base body 8A and the second base body 8B that the interfacial boundary K between the first base body 8A and the second base body 8B is inclined with respect to a tire axial direction line as shown in FIG. 2.

In particular, it is preferable that the intersection Po of the outer surface of the tire framework member 2 and the interfacial boundary K is located inside in the tire radial direction than the intersection Pi of the inner surface of the tire framework member 2 and the interfacial boundary K.

Thereby, the exposed area of the outer surface of the second base body 8B is reduced, which helps to suppress damage such as cracks due to tire deformation.

It is preferable that the height hb in the tire radial direction, of the intersection Po from the bead baseline BL is in a range of 1.0 to 3.0 times a rim flange height hf.

If less than 1.0 times, it becomes difficult to sufficiently improve the steering stability. On the contrary, if more than 3.0 times, the effect of suppressing damage such as cracks is reduced, and it is disadvantageous for the ride comfort performance.

The rim flange height hf is defined as the height in the tire radial direction, of the top of the rim flange Rf from the bead baseline BL.

In this example, an annular bead core 10 is disposed in the second base body 8B in order to increase the fitting force with the rim R.

As the bead core 10, a tape bead structure and a single wind structure can be appropriately adopted.

In the tape bead structure, the bead core 10 is formed by spirally winding a band body which is an array of bead wires aligned parallel to each other and topped with a rubber or a thermoplastic resin, from the inside to the outside in the radial direction.

In the single wind structure, the bead core 10 is formed by continuously winding one bead wire in a spiral and multi-row multi-layer manner.

As the bead wire, a steel cord is preferably used, but an organic fiber cord may also be used.

Depending on the category of the tire and the like, it is also possible not to provide the bead core 10.

As shown in FIG. 1, the tread reinforcing component 4 is disposed on the outer surface in the tire radial direction, of the under tread portion 7. Further, the ground contacting tread component 3 is disposed on the outside in the tire radial direction, of the tread reinforcing component 4.

The ground contacting tread component 3 is a portion for contacting with the road surface, and the outer surface in the tire radial direction forms the tire ground contacting surface 1S.

In the ground contacting surface 3S, tread grooves 9 for enhancing wet performance may be formed in various patterns.

The ground contacting tread component 3 may be made of vulcanized rubber or a thermoplastic resin.

However, from the viewpoint of improving the material recyclability, it is preferable that the ground contacting tread component 3 is made of a thermoplastic resin.

When a thermoplastic resin is used for the ground contacting tread component 3, it is preferable that the ground contacting tread component 3 is made of a first thermoplastic resin M1 having a tensile elastic modulus E1 which is smaller than the tensile elastic moduli E2 and E3 of the second and third thermoplastic resins M2 and M3, respectively, from the viewpoint of improving the followability to the road surface and improving the grip.

Preferably, the tensile elastic moduli E2 and E3 are in a range from 30 to 200 MPa. If less than 30 MPa, the rigidity of the tire framework member 2 itself becomes insufficient, and it becomes difficult to secure steering stability. On the contrary, if exceeds 200 MPa, the vertical stiffness of the tire becomes excessively large, and the ride comfort is deteriorated. From the viewpoint of achieving both the steering stability and ride comfort, it is more preferable that E2 < E3.

The tensile elastic modulus is a value measured according to the test method described in "Plastics - Determination of tensile properties" of JIS K7161.

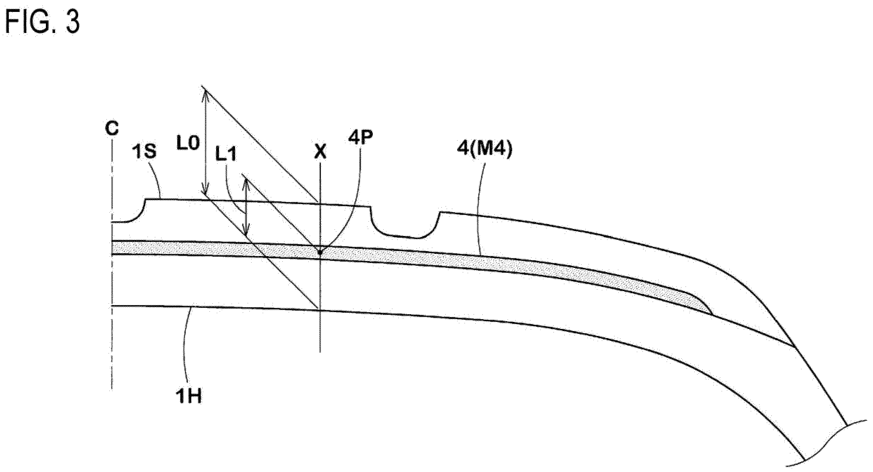

As shown in FIG. 3, the tread reinforcing component 4 is made of a thermoplastic resin, and in this example, it is formed as a resin reinforcing layer 15 made of a fourth thermoplastic resin M4 different from the first to third thermoplastic resins M1 to M3.

The tensile elastic modulus E4 of the fourth thermoplastic resin M4 is larger than the tensile elastic moduli E1 to E3.

The tread reinforcing component 4 restrains the under tread portion 7 by its hooping effect, and stabilizes the ground contact shape of the tire. For that purpose, the tensile elastic modulus E4 of the fourth thermoplastic resin M4 is preferably not less than 1000 MPa, more preferably not less than 2000 MPa.

Further, from the viewpoint of suppressing damage, the tensile elastic modulus E4 of the fourth thermoplastic resin M4 is preferably not less than 200 MPa.

In order to enhance the hooping effect of the tread reinforcing component 4, it is preferable to include a fibrous filler in the fourth thermoplastic resin M4, and it is more preferable to orient the filler in the tire circumferential direction.

Suitable fillers include carbon fibers, glass fibers, aramid fibers, cellulose nanofibers (CNF), cellulose nanocrystals (CNC) and the like, and these can be used alone or in combination.

Even when such fourth thermoplastic resin M4 is used, as compared with the case where the tread reinforcing component is formed by a reinforcing cord such as a steel cord, the stability of the ground contact shape of the tire is reduced, which tends to adversely affect the running performance of the tire.

Therefore, the tread reinforcing component 4 is disposed closer to the tire ground contacting surface 1S.

Specifically, as shown in FIG. 3, on an arbitrary reference line X extending across the tread reinforcing component 4 in parallel with the tire equator C, the following requirements are satisfied.

That is, on the reference line X, the thickness center point 4P of the tread reinforcing component 4 is at a distance L1 in the tire radial direction from the tire inner cavity surface 1H which is in a range from 50% to 95% of the distance L0 in the tire radial direction from the tire inner cavity surface 1H to the tire ground contacting surface 1S.

With this configuration, the thickness of the under tread portion 7 is increased, and the under tread portion 7 is restrained at a position close to the tire ground contacting surface 1S.

Thereby, the stability of the ground contact shape of the tire can be ensured, and the running performance, particularly the steering stability, can be maintained at a high level.

If the distance L1 is less than 50% of the distance L0, the effect of ensuring the stability of the ground contact shape is not sufficiently exhibited. On the contrary, if more than 95%, it becomes difficult to form tread grooves 9 and secure the wear life.

From such a viewpoint, the lower limit of the distance L1 is preferably not less than 55% of the distance L0, and the upper limit is preferably not more than 70%.

It is also preferable that the value of the ratio L1/L0 gradually increases from the tire equator C toward the outside in the tire axial direction.

In the present application, the "thermoplastic resin" includes a thermoplastic elastomer.

The "thermoplastic resin" means a polymer compound in which the material is softened and flowable as the temperature rises, and its condition becomes relatively hard and strong when cooled.

This "thermoplastic elastomer" has the characteristics such that the material is softened and flowable as the temperature rises, and when cooled, it becomes relatively hard and strong and has rubber-like elasticity.

Considering the elasticity required during running, moldability during manufacturing and the like, a thermoplastic elastomer is preferably used for the tire framework member 2 and the ground contacting tread component 3, and a thermoplastic resin having no rubber-like elasticity is preferably used for the tread reinforcing component 4.

Examples of the thermoplastic elastomer include polyamide-based thermoplastic elastomers, polyester-based thermoplastic elastomers, polyurethane-based thermoplastic elastomers, polystyrene-based thermoplastic elastomers and polyolefin-based thermoplastic elastomers, and it is possible to use alone or in combination.

Next, an example of the manufacturing method of the tire 1 of the embodiment will be illustrated.

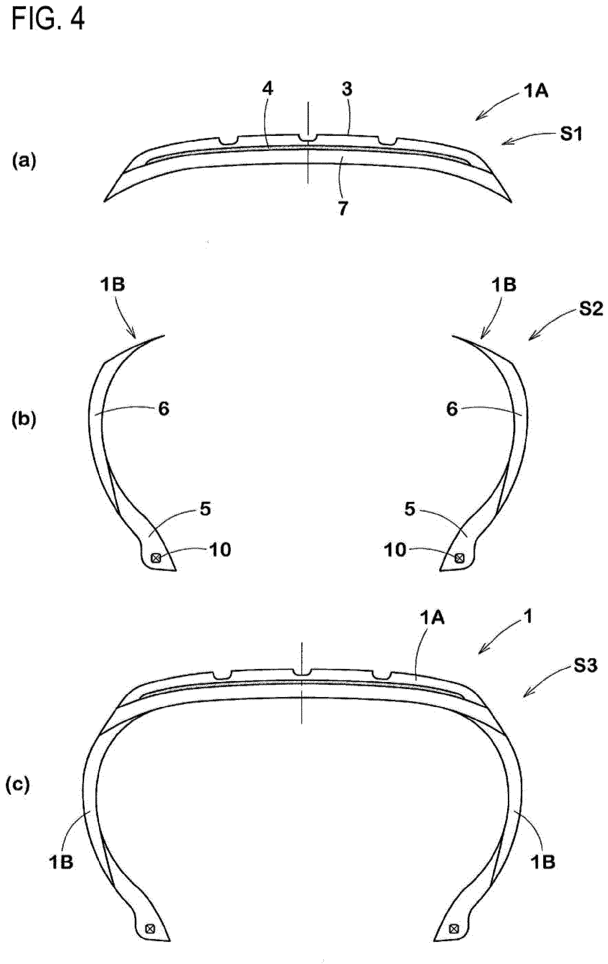

As conceptually shown in FIG. 4 (a) to (c), the manufacturing method in this example comprises
- step S1 of forming a first tire base 1A in which the under tread portion 7, the tread reinforcing component 4 and the ground contacting tread component 3 are integrated,
- step S2 of forming a second tire base 1B in which the sidewall portions 6, the bead portions 5 and the bead cores 10 are integrated, and
- step S3 of forming the tire 1 by joining the first tire base 1A and the second tire base 1B.

In the step S1, the first tire base 1A is formed by performing composite molding by injecting the first thermoplastic resin M1, the second thermoplastic resin M2, and the fourth thermoplastic resin M4 into a cavity.

In the step S2, after the bead core 10 is formed in advance, the second tire base 1B is formed by performing a composite molding by injecting the second resin material M2 and the third resin material M3 into a cavity in which the bead core 10 is set.

In the step S3, the first tire base 1A and the second tire base 1B are joined by thermal fusion bonding or using an adhesive.

As the adhesive, for example, Aron Alpha EXTRA2000 (registered trademark) manufactured by Toagosei Co., Ltd., Loctite 401J (registered trademark) manufactured by Henkel Japan Ltd., and the like are preferably used.

While detailed description has been made of an especially preferable embodiment of the present invention, the present invention can be embodied in various forms without being limited to the illustrated embodiment.

### Embodiments

In order to confirm the effects of the present invention, the ground contacting width and productivity of a tire (195/65R15) for passenger cars, having the structure shown in FIG. 1, were estimated when prototyped based on the specifications shown in Table 1.

Comparative Example 1 had substantially the same configurations as embodiments except that the tread reinforcing component was a cord reinforcing layer in which a steel cord was spirally wound.

In the comparative examples and the embodiments, the contours of the tire cross-sectional shapes were the same as each other before filling the internal pressure air.

Further, in the embodiments, a filler made of glass fiber was included in the tread reinforcing component.

### < Ground contacting width >

The width in the tire axial direction of the ground contacting surface (ground contacting width) was calculated by a simulation by a finite element method when the tire was contacted with the road surface vertically under conditions of a normal rim (15x6JJ), a normal internal pressure (230kPa) and a normal load (3.43kN).

The results are expressed by an index with the comparative example 1 as 10. The larger the value, the better the stability of the ground contact shape.

### < Productivity >

The productivity of the tire is expressed by an index with the comparative example 1 as 10. The larger the number, the better the productivity.

**[Table 1 ]**

| | comparative example 1 | embodiment 1 | embodiment 2 | embodiment 3 | embodiment 4 | embodiment 5 | embodiment 6 | embodiment 7 | embodiment 8 | comparative example 2 |
|---|---|---|---|---|---|---|---|---|---|---|
| tread reinforcing component | steel | resin A | resin A | resin B | resin B | resin A | resin A | resin A | resin A | resin A |
| -filler orientation direction | - | axial direction | circumferential direction | axial direction | circumferential direction | axial direction | circumferential direction | circumferential direction | circumferential direction | circumferential direction |
| -ratio L1/L0 | 0.55 | 0.65 | 0.65 | 0.65 | 0.65 | 0.65 | 0.65 | 0.5 | 0.95 | 0.4 |
| bead core covering portion, sidewall portion, under tread portion | resin C | resin C | resin C | resin C | resin C | resin D | resin D | resin C | resin C | resin C |
| ground contacting width | 10 | 12 | 13 | 10 | 11 | 10 | 11 | 11 | 13 | 8 |
| productivity | 10 | 12 | 12 | 12 | 12 | 12 | 12 | 12 | 12 | 12 |

The thermoplastic resins used in Table 1 are shown in Table 2.

**[Table 2 ]**

| resin | name | manufacturer | tensile elastic modulus (Mpa) | type |
|---|---|---|---|---|
| A | JF-30G | Toyobo | 25000 | polyamide-based thermoplastic resin |
| B | PA6-G30 | Toyobo | 6530 | polyamide-based thermoplastic resin |
| C | Elastran 1198ATR | BASF | 74.3 | polyurethane-based thermoplastic elastomer |
| D | UBESTA XPA9040 | Ube Industries | 78 | polyamide-based thermoplastic elastomer |

As shown in Table 1, it can be confirmed that, in the embodiments, the production efficiency could be improved while ensuring the stability of the ground contact shape.

By forming the tread reinforcing component with a thermoplastic resin, it can contribute to the improvement of the material recyclability.

### Description of the signs

- 1: pneumatic tire
- 1H: tire inner cavity surface
- 1S: tire ground contacting surface
- 2: tire framework member
- 3: ground contacting tread component
- 4: tread reinforcing component
- 4P: center point
- 5: bead portion
- 6: sidewall portion
- 7: under tread portion
- C: tire equator
- X: reference line

## Claims

1. A pneumatic tire comprising a tread reinforcing component disposed between a tire inner cavity surface and a tire ground contacting surface, wherein
the tread reinforcing component is made of a thermoplastic resin, and on an arbitrary reference line which extends across the tread reinforcing component in parallel with the tire equator, a distance L1 in the tire radial direction from the tire inner cavity surface to the thickness center point of the tread reinforcing component is in a range of 50% to 95% of a distance L0 in the tire radial direction from the tire inner cavity surface to the tire ground contacting surface.

2. The pneumatic tire as set forth in claim 1, wherein
the tire comprises a toroidal tire framework member including a pair of bead portions, a pair of sidewall portions and an under tread portion connecting the pair of sidewall portions, and
an inner surface in the tire radial direction, of the under tread portion forms the tire inner cavity surface, and on an outer surface in the tire radial direction, the tread reinforcing component is disposed.

3. The pneumatic tire as set forth in claim 1 or 2, wherein
the tire framework member is made of the same thermoplastic resin or plural kinds of thermoplastic resins.

4. The pneumatic tire as set forth in any one of claims 1 to 3, wherein
the tire is provided, on the outer side in the tire radial direction of the tread reinforcing component, with a ground contacting tread component which forms the tire ground contacting surface, and
the ground contacting tread component is made of vulcanized rubber or a thermoplastic resin.

5. The pneumatic tire as set forth in any one of claims 1 to 4, wherein a tensile elastic modulus of the thermoplastic resin forming the tread reinforcing component is not less than 1000 MPa.

6. The pneumatic tire as set forth in any one of claims 3 to 5, wherein a tensile elastic modulus of the thermoplastic resin forming the tire framework member is not more than 30 to 200 MPa.

7. The pneumatic tire as set forth in any one of claims 1 to 6, wherein the thermoplastic resin of the tread reinforcing component contains a fibrous filler.

8. The pneumatic tire as set forth in claim 7, wherein
the filler is oriented in the tire circumferential direction.
